Europäisches Patentamt

European Patent Office

Office européen des brevets

(19)

(11) **EP 1 359 540 A1**

(12) **EUROPEAN PATENT APPLICATION**
published in accordance with Art. 158(3) EPC

(43) Date of publication:
**05.11.2003 Bulletin 2003/45**

(21) Application number: **02710509.7**

(22) Date of filing: **05.02.2002**

(51) Int Cl.[7]: **G06N 3/08**, G06N 3/04

(86) International application number:
**PCT/JP02/00931**

(87) International publication number:
**WO 02/073528 (19.09.2002 Gazette 2002/38)**

(84) Designated Contracting States:
**AT BE CH CY DE DK ES FI FR GB GR IE IT LI LU MC NL PT SE TR**

(30) Priority: **09.02.2001 JP 2001033649**

(71) Applicant: **YAMAHA HATSUDOKI KABUSHIKI KAISHA**
**Iwata-shi, Shizuoka 438-8501 (JP)**

(72) Inventor: **FUJIME, Yoko,**
**Yamaha Hatsudoki Kabushiki Kaisha**
**Iwata-shi, Shizuoka 438-8501 (JP)**

(74) Representative: **Röhl, Wolf Horst, Dipl.-Phys., Dr.**
**Sparing-Röhl-Henseler**
**Patentanwälte**
**Postfach 14 04 43**
**40074 Düsseldorf (DE)**

(54) **LEARNING ARITHMETIC OPEARATION DEVICE AND MULTI-INPUT CONTROLLER USING THE SAME**

(57) To provide a learning arithmetic unit which is suitable for carrying out learning operations by assigning load values to grid points in regions, and thereby moderating the changes in output values after learning, with high learning accuracy retained and without impairing generalizability, as well as to provide a multi-input controller using the learning arithmetic unit and are suitable for controlling a controlled system which has multiple types of input.

In a 3D CMAC according to the present invention, two types of input value--input A and input B--are entered, a numeric range of 0 to 1 is set up for the inputs A and B, a two dimensional space is formed with the two axes representing the inputs A and B, and an input value space is formed by quantizing the numeric ranges 0 to 1 of the inputs A and B in increments of 0.11. Then, the input value space is divided into a grid with predetermined spacing (0.33 by 0.33) to form a plurality of regions. Then, a three-dimensional load value is assigned to each grid point formed at junctions of regions.

FIG. 1 (A)

FIG. 1 (B)

FIG. 1 (C)

EP 1 359 540 A1

**Description**

Technical Field

The present invention relates to a learning arithmetic technique such as a neural network and CMAC (Cerebller ModelArithmetic Computer) and, more particularly, to a learning arithmetic unit suitable for learning the relationship between input values and output values as well as to a multi-input controller suitable for learning the relationship between various types of input value and output value using the learning arithmetic unit.

Background Art

Conventional learning arithmetic techniques include a neural network which imitates actions of cerebral nerve cells and a CMAC which imitates cerebellar nerve cells. In particular, the CMAC, which learns a complex arithmetic operation as a plurality of simple arithmetic operations by expressing a higher order vector as a plurality of lower order vectors using mapping, can reduce complexity of processing caused by multidimensional inputs and an increased number of intermediate layers in neural networks. Expectations are placed on its applications.

As described above, the CMAC maps a higher order vector consisting of multiple types of input value to a plurality of lower order vectors to produce output. By substituting these with cerebellar nerve cells, a set of mossy fibers is set up to encode input values, granule cells which correspond to the input values are set up, and then an output value is determined from the sum total of loads carried by selected granule cells.

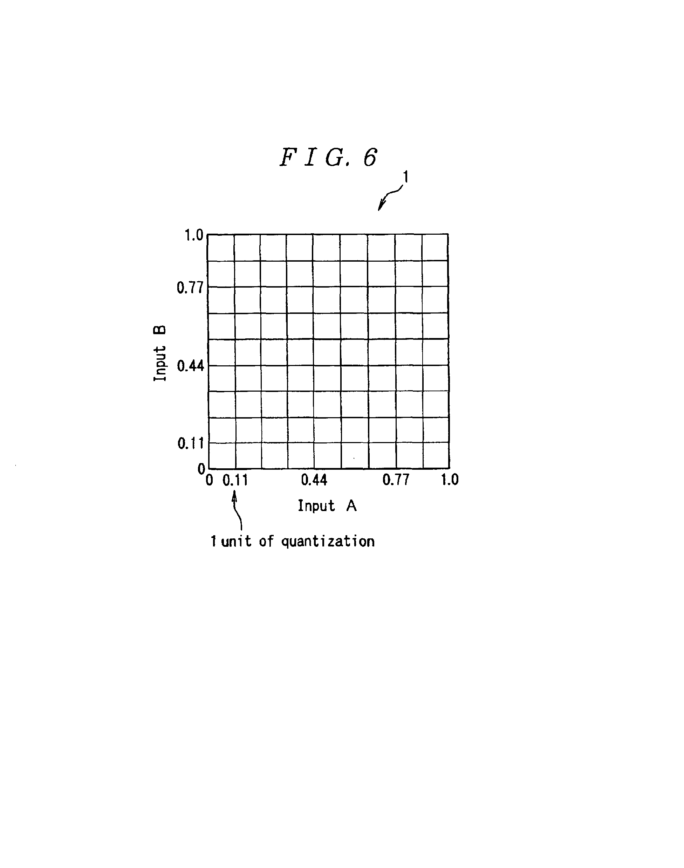

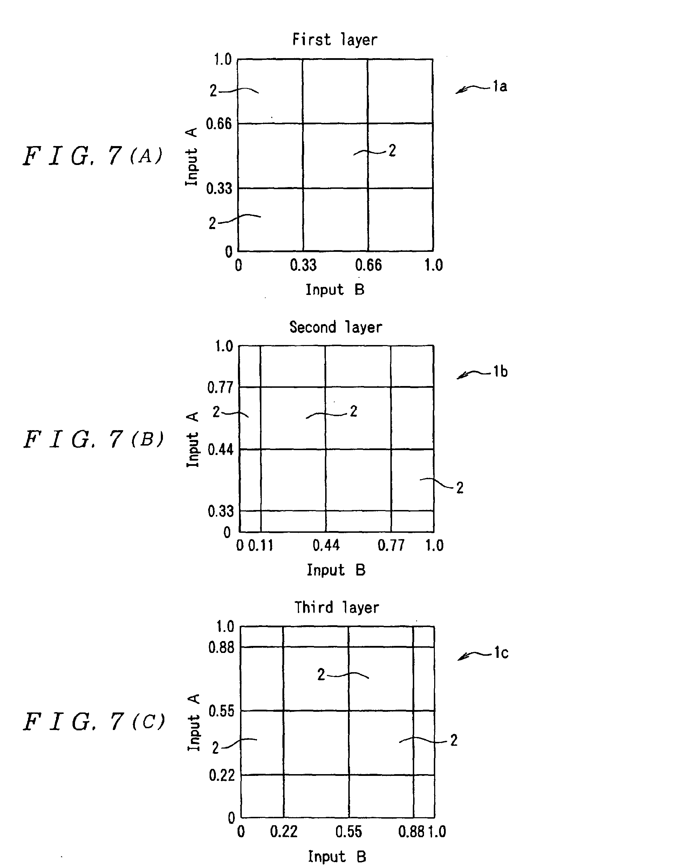

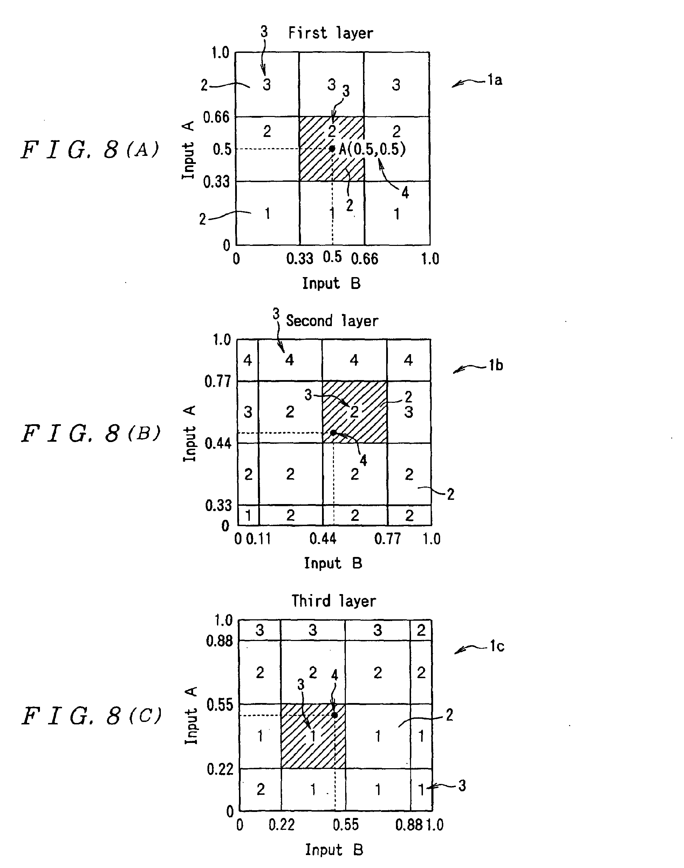

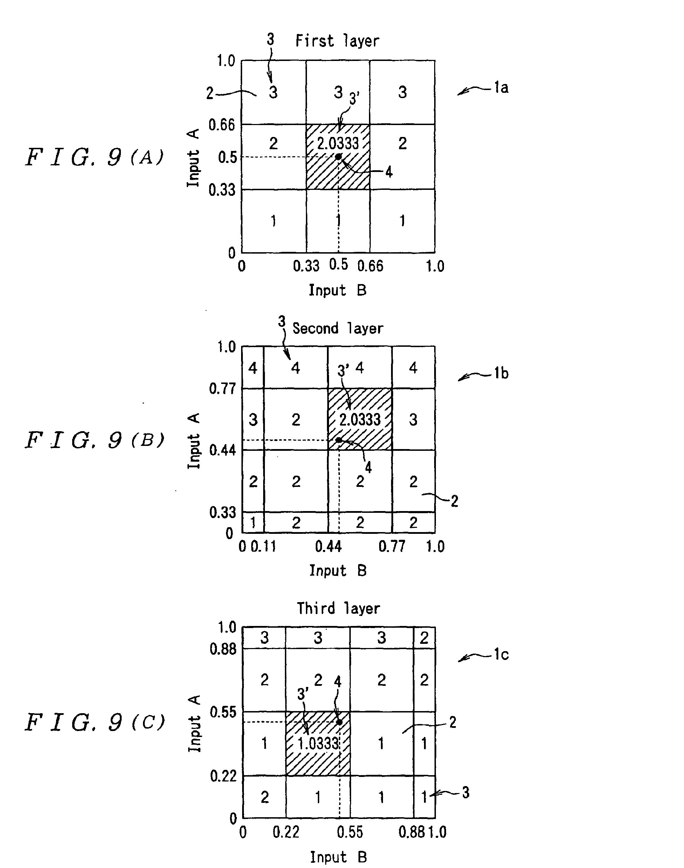

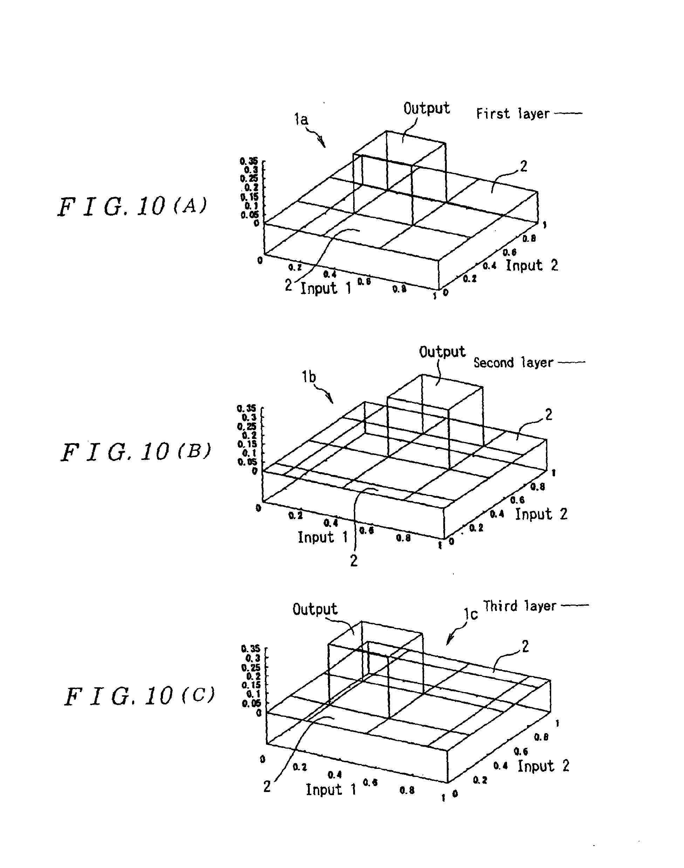

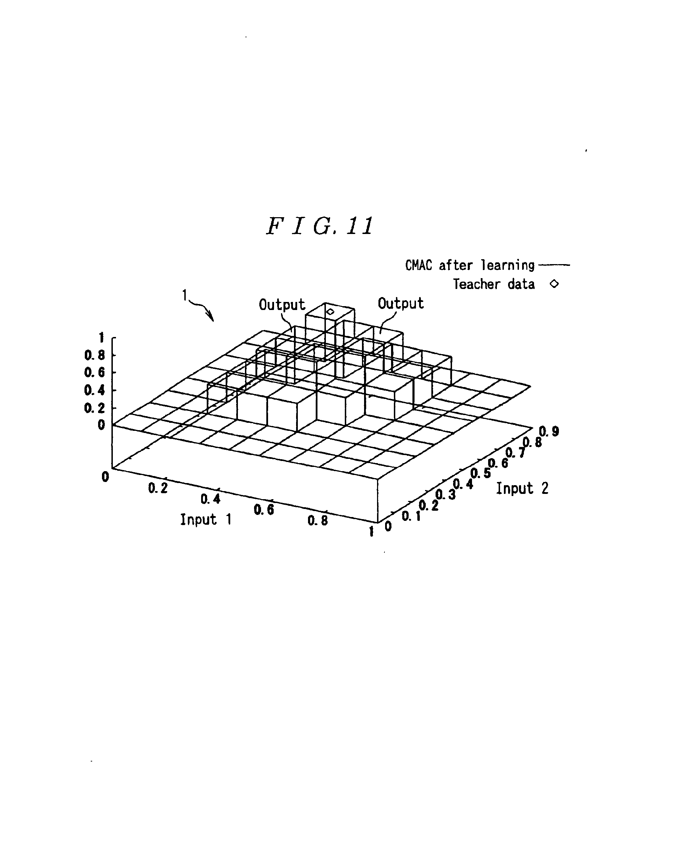

To explain a conventional CMAC in an easy-to-understand manner, its basic principles will be described below taking as an example CMAC-based learning operations shown in Figures 6 to 11. Figure 6 is a diagram showing an input value space of the CMAC, Figure 7 is a diagram showing regions produced by dividing the input value space, Figure 8 is a diagram showing how load values have been assigned to the regions shown in Figure 7 and input values (0.5, 0.5) have been entered, and Figure 9 is a diagram showing the input value space and regions after learning operations are performed on the input values shown in Figure 8. Figure 10 is a perspective view showing output values of the first to third layers of the input value space after the regions 2 learn the respective input values (0.5, 0.5) entered in the three layers, and Figure 11 is a perspective view showing the total sum of output values of the layers in the input value space 1 after some input values are learned.

When using a CMAC, first the input value space 1 compatible with the type of input value to be handled is formed as shown in Figure 6. Here, two types of input value--input A and input B--are entered, a numeric range of 0 to 1 is set up for the inputs A and B, a two dimensional space is formed with the two axes representing the inputs A and B, and the input value space 1 is formed by quantizing the numeric ranges 0 to 1 of the inputs A and B in increments of about 0.11.

Then, the input value space 1 is divided into a grid with predetermined spacing to form the regions 2 as shown in Figure 7. In this example, since each axis in the input value space 1 has a range of 0 to 1, the input value space 1 is divided into two-dimensional areas (0.33 by 0.33) to form a plurality of regions. Thus, the input value space 1 corresponds to the functional part of the cerebellum which encodes input values using a set of mossy fibers while the regions 2 correspond to granule cells.

Furthermore, as shown in Figures 7 (a) to 7(c), the input value space 1 consists of three layers: input value spaces 1a to 1c. For example, if the input value space 1a in Figure 6(a) is designated as the first layer and the input value space 1b in Figure 6(b) is designated as the second layer, the second layer is formed by shifting the regions 2 with respect to the first layer by 0.011 each in the directions of the input A and input B axes. Also, the input value space 1c in Figure 6(c) is designated as the third layer the third layer is formed by shifting the regions 2 with respect to the second layer by 0.011 each in the directions of the input A and input B axes. By stacking these three layers, the above-described input value space 1 is formed finely. Thus, in the CMAC, the number of layers can be increased by shifting the regions 2 with respect to the previous layer by a fixed interval in the directions of the input A and input B axes and the input value space can be refined by stacking the layers. However, the numeric range of the input value space 1 remains 0 to 1.

When the input value space 1 and regions 2 are set up, one load value 3 is assigned to each region 2 in each layer of the input value space 1 as shown in Figures 8(a) to 8(c). The load value 3 has been initialized with a predetermined numeric value. In this example, the values shown in the regions 2 in Figure 8 are set as initial values of the respective regions . When (0.5, 0.5) are entered as input values 4 of the inputs A and B, the total sum of the load values 3 for the regions 2 which correspond to the input values 4 is calculated as an output value. Specifically, since load values "2," "2," and "1" are assigned to the first-, second-, and third-layer regions 2 which correspond to the input values 4, respectively, their total sum 2+2+1=5 is produced as the output value of the CMAC.

When predetermined input values are entered in the input value space 1 and the output value for the input values is calculated, an amount of learning for the input values is calculated according to Equation (1) shown below and the load values 3 for the input values are corrected using the calculated amount of learning.

$$\delta = g(p-p')/|N| \tag{1}$$

where $\delta$ is the amount of learning, p' is the output value of the CMAC, p is teacher data which is an ideal value of the output value p', N is the number of layers in the input value space 1, and g is a learning gain. Thus, the amount of learning $\delta$ is given by the teacher data p minus the output value p', all divided by the number of layers N, and multiplied by the learning gain g. The learning gain here is a gain used in calculating a correction value. Its numeric range is 0 < g < 1. It is "0.1" in this example.

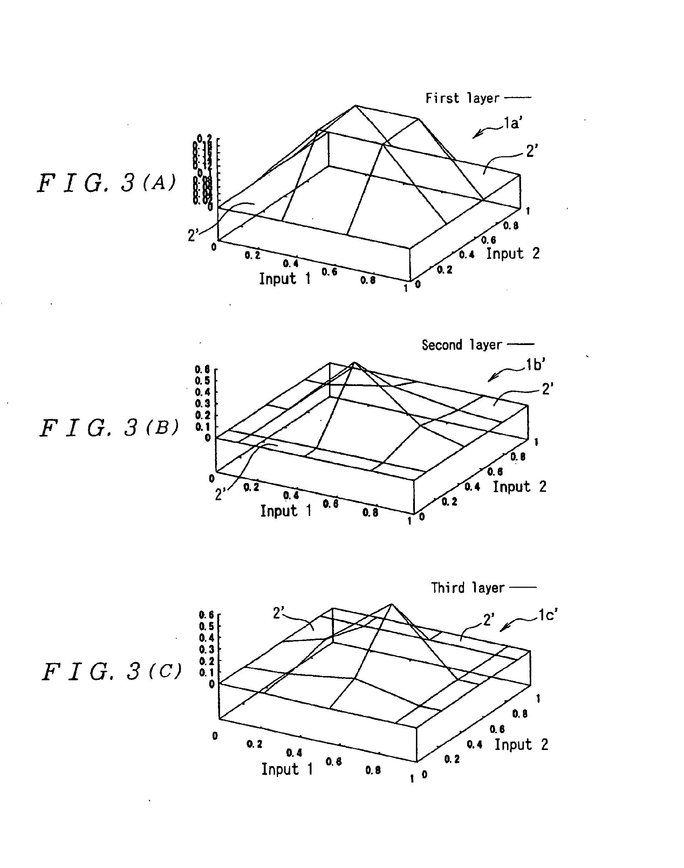

In relation to the input values 4 shown in Figures 8(a) to 8(c), if the teacher data p for the output value of "5" is "6," the amount of learning is calculated as $\delta = 0.0333$ from Equation (1). Then, corrections are made by adding the amount of learning $\delta$ to the load values (2, 2, 1) for the first to third layers. Consequently, the load values 3 for the first to third layers are corrected as load values 3' (2.0333, 2.0333, 1.0333) shown in Figure 3. Thus, the output value for the input values 4 is given as the total sum of the load values 3' "5.0999," and it can be seen that the output value is corrected in such a way as to approach the teacher data "6."

In this way, the CMAC learns in such a way as to bring the output value close to its ideal value, i.e., the teacher data, by correcting the load values 3 for the regions 2 into which the input values are entered with the amount of learning based on Equation (1).

However, since the conventional CMAC learns through the process of correcting a single load value assigned to each region 2 of the input value space 1 provided with teacher data, the output value of each region 2 in the first to third layers of the input value space is uniform in the entire numeric range of the region 2 as shown in Figures 10(a) to 10(c). Consequently, when the output values of these layers are totaled, adjacent regions 2 change stepwise as shown in Figure 11. This means low generalizability.

The generalizability here refers to influence which data has on surrounding data. In this example, it means influence exerted by characteristics of output values in a certain input-output relationship after output values resulting from other input values are learned. If output values change gradually as a result of learning, they will approach the ideal value even in an input-output relationship which is not provided with teacher data.

Thus, when output values change stepwise as described above, it is very likely that output values in an input-output relationship yet to be learned vary greatly from ideal values because input values in the numeric range of a given region result in a uniform output value and output values change sharply at boundaries between adjacent regions. Therefore, to enhance the accuracy of learning, it is necessary to refine the numeric range of the regions or increase the number of layers in the input value space.

However, increasing the number of layers will increase computing work if there are a large number of input-value types . Also, refining the regions will reduce the extent to which results of learning affect the input-output relationship in surrounding regions. Consequently, each region may produce proper outputs only for a narrow range of input values, impairing the generalizability itself.

In view of the prior art problems described above, an invention which improves generalizability characteristics of a CMAC is described in Japanese Patent Laid-Open No. 07-084982. This invention linearly interpolates CMAC's output values which change stepwise, and thereby moderate the changes in the output values to improve the generalizability characteristics.

However, since the above patent moderates the changes in output values using interpolative calculations aside from learning of teacher data, interpolated input-output relations which are not provided with teacher data may produce output values quite different from ideal output values.

The present invention has been made in view of the prior art problems described above. Its object is to provide a learning arithmetic unit which is suitable for carrying out learning operations by assigning load values to grid points in regions, and thereby moderating the changes in output values after learning with high learning accuracy retained, and without impairing generalizability, as well as to provide a multi-input controller using the learning arithmetic unit and are suitable for controlling a controlled system which has multiple types of input.

Disclosure of the Invention

To achieve the above object, the present invention as defined in claim 1 provides a learning arithmetic unit, characterized by comprising: an input value space in which numeric ranges of input values are quantized; regions formed by dividing the input value space into a gridwith fixed spacing; and load values assigned to grid points in the input value space, as well as comprising: output value calculation means which calculates output values of the regions with respect to the input values using the load values at the grid points in the regions which correspond to the input values; and load value correction means which corrects the load values at the grid points in the regions so that the calculated output values of the regions coincide with predetermined ideal values of the output values.

With this configuration, since load values are assigned to grid points, regions share the load values. Consequently, correction to the load value for the region in which input values are entered has a greater effect on the output values of other regions. Also, output values of regions change slantingly rather than uniformly. Thus, gradual changes of output values can be expected.

According to claim 2 of the present invention, in the learning arithmetic unit set forth in claim 1, the input value space is stratified into a desired number of layers containing regions; and the output value calculation means calculates output values of the regions in each of the layers in relation to the input values and totals these output values.

In other words, when stratifying an input value space, quantized in fixed numeric units, into multiple layers, the second and subsequent layers are shifted with respect to the previous layer by a fixed interval in the direction of input axes so that regions will be placed at equal intervals when all the layers are piled up. Consequently, the stratified input value space is divided finely, and so are the output values resulting from the input values in each layer. Besides, since the regions in each layer are not divided further, changes in the output values can be moderated further without degrading the generalizability of the regions in each layer.

According to claim 3 of the present invention, in the learning arithmetic unit set forth in claim 1 or 2, the load value correction means sets up amounts of correction to the load values according to distance between position coordinates of the input values in the respective regions and coordinates of grid points in the same coordinate system.

Specifically, when correcting load values at gridpoints, for example, in an input value space established for two types of input A and B where axes of the input A and input B are designated as axis A and axis B, if appropriate amounts of correction are set according to distance between position coordinates of the input values in the respective regions and coordinates of grid points in the same coordinate system, where the position coordinates can be expressed by the axes A and B, and if the amounts of correction are varied with the load value at each grid point, then the load value at different grid points in each region are corrected by different amounts for the same input value. Since each load value can be corrected appropriately, the output values after learning can be made to change gradually with high learning accuracy retained.

According to claim 4 of the present invention, in the learning arithmetic unit set forth in claim 3, the load value correction means sets the amounts of correction using an inverse ratio of the distance between the position coordinates of the input values in the respective regions and coordinates of grid points in the same coordinate system as a weight.

Specifically, when correcting load values at grid points, for example, in an input value space established for two types of input A and B where axes of the input A and input B are designated as axis A and axis B, if corrections are made such that the closer the load value to the input value, the larger the amount of correction will be, according to an inverse ratio of the distance between the position coordinates of the input values in the respective regions and coordinates of grid points in the same coordinate system, where the position coordinates can be expressed by the axes A and B, each load value can be corrected appropriately and the output values after learning can be made to change gradually with high learning accuracy retained.

According to claim 5 of the present invention, in the learning arithmetic unit set forth in any of claims 1 to 4, when calculating output values of the regions whose load values are not corrected, the output value calculation means calculates the output values of the regions according to the distance between the position coordinates of the input values in the respective regions and coordinates of grid points in the same coordinate system.

Thus, when calculating output values for which no learning is done, by calculating them according to the distance between the position coordinates of the input values in the respective regions and coordinates of grid points in the same coordinate system, it is possible to calculate them in such a way that they change gradually.

According to claim 6 of the present invention, in the learning arithmetic unit set forth in claim 5, the output value calculation means calculates the output values of the regions according to an inverse ratio of the distance between the position coordinates of the input values in the respective regions and coordinates of grid points in the same coordinate system.

Thus, when calculating output values for which no learning is done, for example, in an input value space established for two types of input A and B where axes of the input A and input B are designated as axis A and axis B, if the output values are calculated according to an inverse ratio of the distance between the position coordinates of the input values in the respective regions and coordinates of grid points in the same coordinate system, where the position coordinates can be expressed by the axes A and B, it is possible to calculate them in such a way that they change gradually.

Besides, the present invention as defined in claim 7 provides a multi-input controller, characterized in that: the learning arithmetic units set forth in claims 1 to 6 are installed together in a control system which has multiple types of input value; two predetermined input values from among the multiple types of input value are entered in the learning arithmetic units; the total sum of output values of the regions in relation to the input values to the learning arithmetic units installed together is calculated as a controlled variable of the control system; and load values at grid points in the regions which correspond to the input values are corrected so that the controlled variable of the regions coincide with a predetermined ideal value of the controlled variable.

With this configuration, by providing as many learning arithmetic units--which accepts two inputs and produces one output, for example--as required in a control system which has many types of input value and calculating the total sum of their output values as a controlled variable of the control system, it is possible to learn relationship between the input values and output value which is the controlled variable without complicating learning operations by making the input value space multidimensional. In other words, since the control system which has many types of input value can be expressed by a combination of three-dimensional spaces, the designer can understand the system readily and limits on the number of inputs can be eliminated.

According to claim 8 of the present invention, in the multi-input controller set forth in claim 7, each output value of the learning arithmetic units installed together is weighted and the total sum of the output values is used as the controlled variable.

In other words, according to this invention, in the multi-input controller set forth in claim 7, the output values of the learning arithmetic units are weighted and then the total sum of the outputs is calculated as the controlled variable of the control system. This makes it possible to learn the relationship between the input values and controlled variable more quickly with higher accuracy than when load values of the learning arithmetic units are corrected simply.

According to claim 9 of the present invention, in the multi-input controller set forth in claim 8, the output values of the learning arithmetic units are weighted based on their contribution rate to the controlled variable.

In other words, in the multi-input controller set forth in claim 8, when weighting the output values of the learning arithmetic units installed together, this invention aims at doing learning efficiently with high accuracy by varying the weights, for example, according to the contribution rate made by the respective learning arithmetic units to the controlled variable which is the final output value.

According to claim 10 of the present invention, in the multi-input controller set forth in claim 7, the output values of the learning arithmetic units installed together are averaged to determine the controlled variable.

In other words, since the output values of the learning arithmetic units are averaged as the controlled variable, it is possible to determine the controlled variable by taking into consideration elements of input values equally.

According to claim 11 of the present invention, in the multi-input controller set forth in claim 10, the maximum value or minimum value of the output values of the learning arithmetic units installed together is used as the controlled variable.

In other words, since the maximum value or minimum value of the output values of the learning arithmetic units installed together is used as the controlled variable, the controlled variable can provide for the worst characteristics.

Brief Description of the Drawings

Figure 1 is a diagram showing how a learning arithmetic technique (hereinafter, 3D CMAC) according to the present invention is applied to an input value space 1 shown in Figure 6;
Figure 2 is an enlarged view of a region in the 3D CMAC;
Figure 3 is a perspective view showing relationship between an input value space in each layer and output values resulting from input values (0.5, 0.5) after learning using the 3D CMAC;
Figure 4 is a perspective view showing stacked relations between the three layers of the input value space 1 and output values after some input values are learned;
Figure 5 is a perspective view showing relationship between the input value space and output values after a function in Equation (12) is learned by the 3D CMAC;
Figure 6 is a diagram showing the input value space of the CMAC;
Figure 7 is a diagram showing regions produced by dividing the input value space;
Figure 8 is a diagram showing how load values have been assigned to the regions shown in Figure 7 and input values (0.5, 0.5) have been entered;
Figure 9 is a diagram showing the input value space and regions after learning operations are performed on the input values (0.5, 0.5);
Figure 10 is a perspective view showing output values of the first to third layers of the input value space after the regions 2 learn the respective input values (0.5, 0.5) entered in the three layers;
Figure 11 is a perspective view showing a stack of output values of the layers in the input value space 1 after some input values are learned;
Figure 12 is a perspective view showing relationship between an input value space and output values after the function in Equation (12) is learned by a conventional CMAC;
Figure 13 is a diagram showing a three-dimensional map consisting of three axis--X axis, Y axis, and Z axis--with

data $\alpha$ (x, y) entered;
Figure 14 is a block diagram showing an engine controller;
Figure 15 is a diagram showing input-output relationship during initial learning conducted by a learning arithmetic unit which calculates intake air quantity;
Figure 16 is a block diagram showing a configuration of a multi-input controller for determining injection quantity using many types of input value in car engine control;
Figure 17 is a block diagram showing a configuration of amulti-input controller for temperature correction using many types of input value;
Figure 18 is a flowchart showing an arithmetic learning process of an optimal fuel injection duration; and
Figure 19 is a flowchart showing an arithmetic learning process of an optimal fuel ignition timing.

Best Mode for Carrying Out the Invention

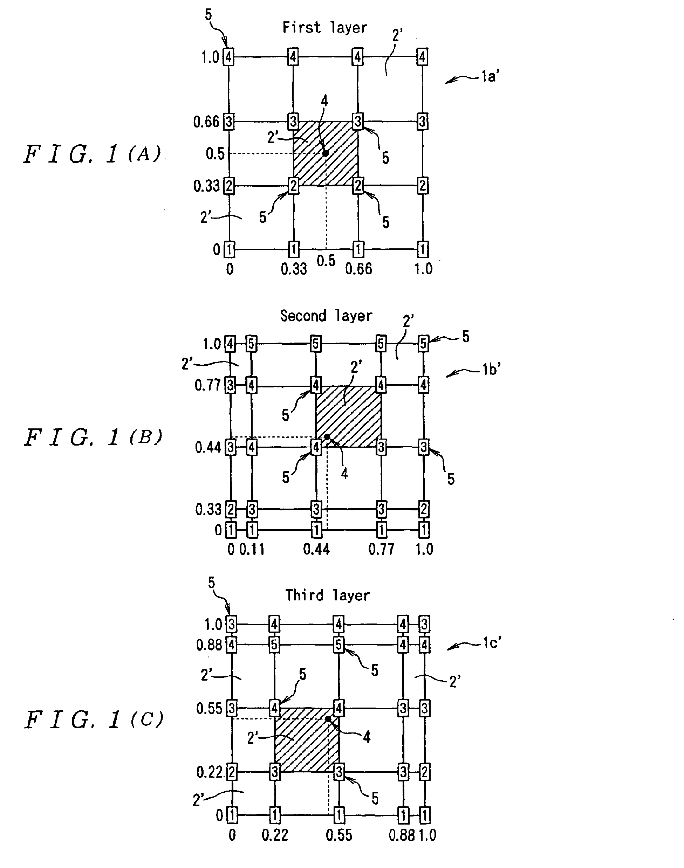

Embodiments of the present invention will be described below with reference to the drawings. Figures 1 to 5 and Figures 12 to 19 are diagrams showing embodiments of a learning arithmetic unit and multi-input controller using the same according to the present invention.

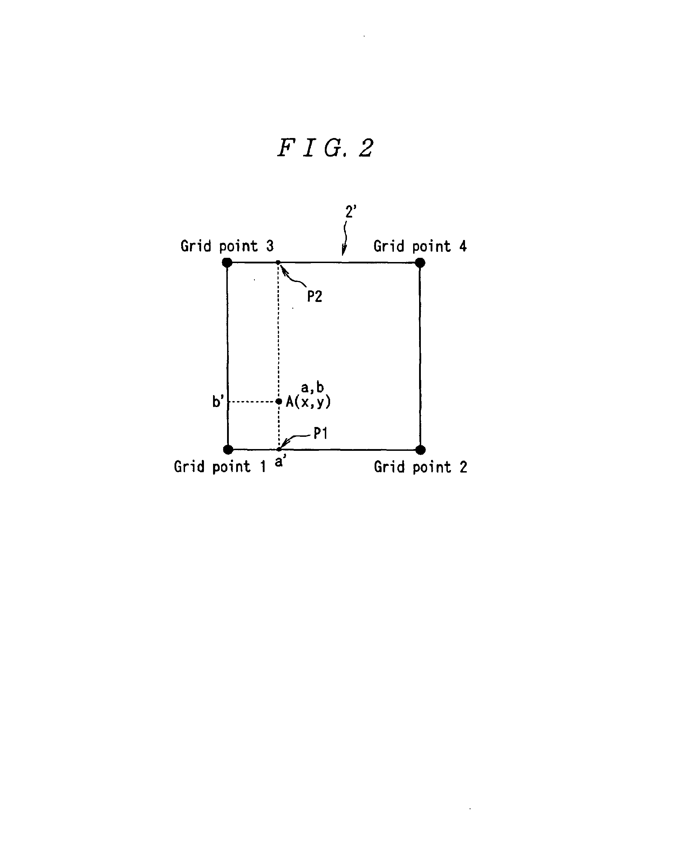

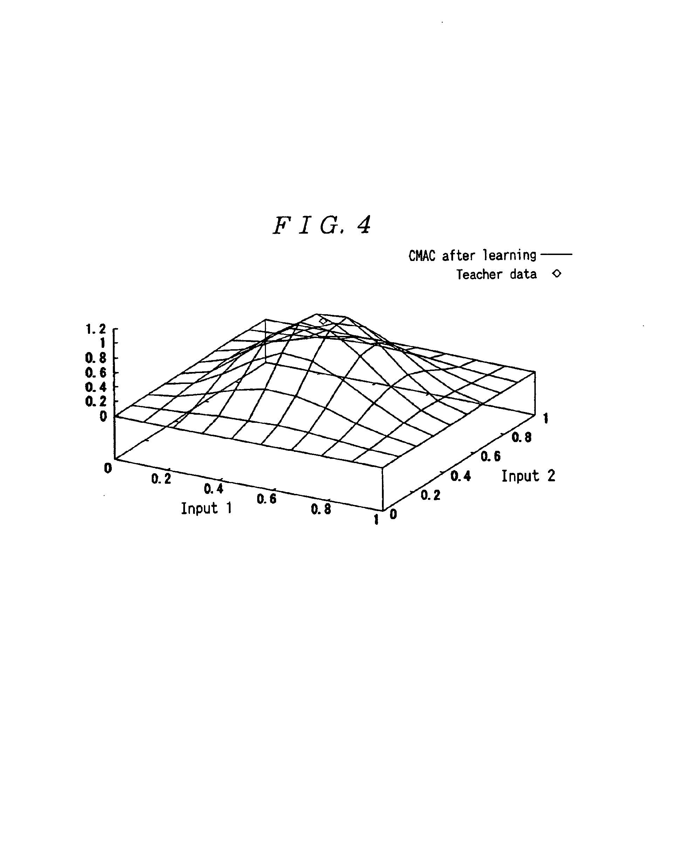

First, a learning arithmetic technique applied to the learning arithmetic unit according to the present invention will be described with reference to drawings. Figure 1 is a diagram showing how a learning arithmetic technique (hereinafter, 3D CMAC) according to the present invention is applied to an input value space 1 shown in Figure 6 while Figure 2 is an enlarged view of a region in the 3D CMAC. Figure 3 is a diagram showing relationship between an input value space in each layer and output values resulting from input values (0.5, 0.5) after learning using the 3D CMAC. Figure 4 is a perspective view showing relationship between the input value space 1 and output values after learning an input-output relationship concerning some input values.

As shown in Figure 1, two types of input value--input A and input B--are entered in the 3D CMAC as is the case with the conventional CMAC described above, a numeric range of 0 to 1 is set up for the inputs A and B, and a two dimensional space is formed with the two axes representing the inputs A and B to create the input value space 1. Then, the numeric ranges 0 to 1 of the inputs A and B are divided into M by N segments, respectively (there is no need that M = N), to form regions 2. In this example, M = 3 and N = 3. Thus, the input value space 1 is divided into a plurality of 0.33 by 0.33 regions 2 arranged in a grid pattern.

With the 3D CMAC, a three-dimensional load value 5 is assigned to each of the grid points formed at the junctions of the regions as shown in Figure 1. Consequently, four load values 5 are assigned to each region 2, meaning that the same load value 5 is shared by adjacent regions 2. Output values for predetermined input values are calculated from the four load values at the grid points of the regions 2 in which the input values are entered, according to Equations (2) to (4) shown below.

$$p1 = z11+(z21-z11) \div (x2-x1)*(x-x1) \tag{2}$$

$$p2 = z12+(z22-z12) \div (y2-y1)*(x-x1) \tag{3}$$

$$z = p1+(P2-P1) \div (y2-y1)*(y-y1) \tag{4}$$

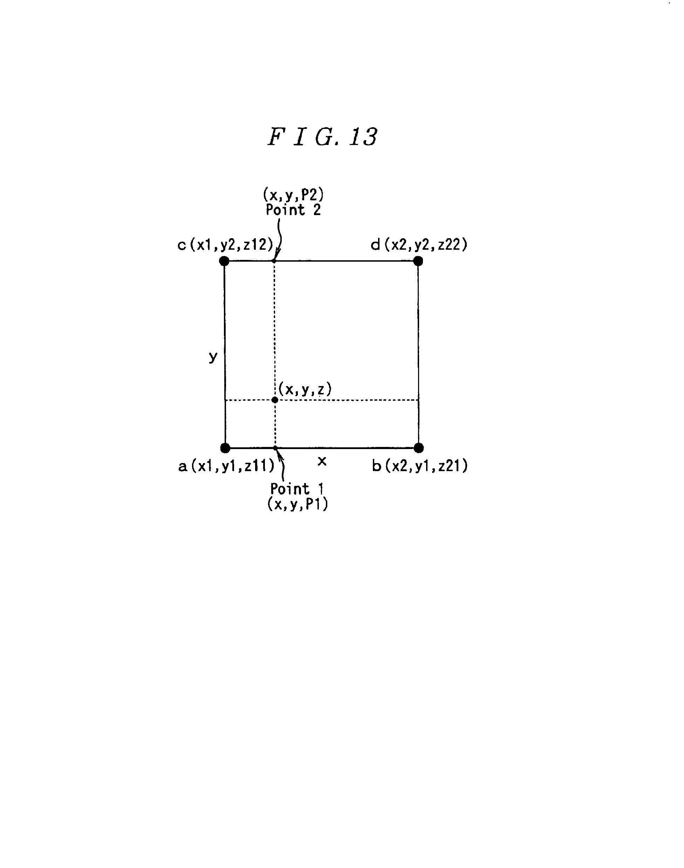

Equations (2) to (4) above are data interpolation formula used for three-dimensional mapping. Equations (2) to (4) will be described below with reference to Figure 13. Figure 13 is a diagram showing a three-dimensional map consisting of three axis--X axis, Y axis, and Z axis--with data $\alpha$ (x, y) entered.

Interpolation computation for three-dimensional mapping consists in calculating Z coordinates of the data $\alpha$ (x, y) shown in Figure 13 using data a to d located at the four corners of the region which forms the three-dimensional map. It involves calculating, for example, interpolation data for smoothing the surface on the plane containing the data a to d which form the three-dimensional map, according to Equations (2) to (4) above. According to this embodiment, first the two-dimensional input value data $\alpha$ is set up, and the Z-axis coordinates of the input value data $\alpha$ are calculated from the data at four corners as output values according to Equations (2) to (4) above.

In Equations (2) to (4) above, p1 and p2 are the Z-axis coordinates of point 1 and point 2 in Figure 13; z11 to z22 are the Z-axis coordinates of the data a to d; x1 is the x-axis coordinate of the data a and c; x2 is the x-axis coordinate of the data b and d; y1 is the y-axis coordinate of the data a and c; y2 is the y-axis coordinate of the data b and d; and x, y, and z are the X-, Y-, and Z-axis coordinates of the data $\alpha$, respectively.

Thus, Equation (2) above calculates the Z-axis coordinate p1 of point 1 as follows: calculates the Z-axis distance between the data a and data b by subtracting the Z-axis coordinate z11 of the data a from the Z-axis coordinate z21 of the data b, divides this distance by the X-axis distance between the data a and data b, which is obtained by subtracting the X-axis coordinate x1 of the data a from the X-axis coordinate x2 of the data b, multiplies the quotient by the X-axis distance between the data $\alpha$ and data a, which is obtained by subtracting the X-axis coordinate x1 of the data a from the X-axis coordinate x of the data $\alpha$, and adds the product to the Z-axis coordinate z11 of the data a.

Also, Equation (3) above calculates the Z-axis coordinate p2 of point 2 as follows: calculates the Z-axis distance between the data c and data d by subtracting the Z-axis coordinate z12 of the data c from the Z-axis coordinate z22 of the data d, divides this distance by the X-axis distance between the data c and data d, which is obtained by subtracting the X-axis coordinate x1 of the data c from the X-axis coordinate x2 of the data d, multiplies the quotient by the X-axis distance between the data $\alpha$ and data c, which is obtained by subtracting the X-axis coordinate x1 of the data c from the X-axis coordinate x of the data $\alpha$, and adds the product to the Z-axis coordinate z12 of the data c.

Then, Equation (4) above calculates the Z-axis coordinate z of the data $\alpha$ as follows: calculates the Z-axis distance between point 1 and point 2 by subtracting p1 calculated by Equation (3) above from p2 calculated by Equation (2) above, divide this distance by the distance between the two points, obtained by subtracting y1 from y2, and multiplies the quotient by the distance between the two points, obtained by subtracting y1 from the Y-axis coordinate y of the data $\alpha$.

Next, based on the interpolation computation for three-dimensional mapping described above, formulas for calculating output values of the 3D CMAC according to the present invention and formulas for calculating amounts of correction to load values will be described with reference to Figure 2. Figure 2 is an enlarged view of a region 2' shown in Figure 1.

First, formulas for calculating output values of the 3D CMAC by the application of Equations (2) to (4) above are shown below as Equations (5) to (7).

The 3D CMAC according the first embodiment handles numeric values of the load values 5 as Z-axis coordinates and represents their locations on the grid points in the regions 2' as three-dimensional coordinates using three axis including an A axis and B axis, which are axes of an input value 4. Thus, when the two-dimensional input value 4 (a, b) is entered, the 3D CMAC calculates the Z coordinate of the input value 4 as an output value of the 3D CMAC accordig to Equations (5) to (7).

$$p'1(N) = z11+(z21-z11)\div(a2-a1)*(a-a1) \tag{5}$$

$$p'2(N) = z12+(z22-z12)\div(a2-a1)*(a-a1) \tag{6}$$

$$p'(N) = p'1(N)+(p'2(N)-p'1(N))\div(b2-b1)*(b-b1) \tag{7}$$

where N (N = 1, 2, 3 according this embodiment) indicates which layer constitutes the input value space 1; p'1(N) and p'2(N) are the Z coordinates of P1 and P2, respectively, in the region 2' in the N-th layer shown in Figure 2; (a1, b1, z11), (a2, b1, z21), (a1, b2, z12), and (a2, b2, z22) are the coordinates of the load values 5 at the first to fourth grid points; (a, b) is the coordinates of the input value 4; and p'(N) is the output value of the 3D CMAC in the N-th layer.

Thus, when calculating the interpolation data for three-dimensional mapping described above, using the load values 5 on the first to fourth grid points the Z coordinate of the input value (a, b) is calculated according to Equations (5) to (7) above and is used as the output value p' (N) in the N-th layer. Incidentally, Equations (5) to (7) above are the same as Equations (2) to (4) described earlier if their symbols are substituted, and thus detailed description thereof will be omitted.

When the output value p' of the 3D CMAC in relation to the input value 4 (a, b) is determined by calculating the total sum of p'(1) to p' (n), the amount of learning $\delta$ is calculated from the output value p' and teacher data p for the output value p' according to Equation (1) above, as is the case with the conventional CMAC. It is assumed that a learning gain is 0.1. When $\delta$ has been calculated, the amounts of correction $\delta1$ to $\delta4$ to the load values 5 at the first to fourth grid points are calculated using inverse ratios of distances between the locations of the input value 4 (a, b) in the region 2' and grid points, according to Equations (8) to (11).

$$\delta1(N) = \delta*\{((a2-a)\div(a2-a1))*((b3-b)\div(b3-b1))\} \tag{8}$$

$$\delta2(N) = \delta*\{((a-a1)\div(a2-a1))*((b3-b)\div(b3-b1))\} \tag{9}$$

$$\delta3(N) = \delta*\{((a2-a)\div(a2-a1))*((b-b1)\div(b3-b1))\} \qquad (10)$$

$$\delta4(N) = \delta*\{((a-a1)\div(a2-a1))*((b-b1)\div(b3-b1))\} \qquad (11)$$

where N (N=1, 2, 3 according this embodiment) indicates which layer constitutes the input value space 1, and $\delta1$ (N) to $\delta4$(N) are the amounts of correction to the load values 5 at the first to fourth grid points.

Thus, Equation (8) calculates the amount of correction $\delta1$ to the load value 5 at the first grid point in the N-th layer as follows: divides the distance between the A coordinate of the second grid point and the input value a by the A-axis distance between the first grid point and second grid point, divides the distance between the B coordinate of the third grid point and the input value b by the B-axis distance between the first grid point and third grid point, multiplies the two quotients, and multiplies the product by the amount of correction $\delta$.

Also, Equation (9) calculates the amount of correction $\delta2$ to the load value 5 at the second grid point in the N-th layer as follows: divides the distance between the input value a and first grid point by the A-axis distance between the first grid point and second grid point, divides the distance between the third grid point and input value b by the B-axis distance between the third grid point and first grid point, multiplies the two quotients, and multiplies the product by the amount of correction $\delta$.

Also, Equation (10) calculates the amount of correction $\delta3$ to the load value 5 at the third grid point in the N-th layer as follows: divides the distance between the A coordinate of the second grid point and the input value a by the A-axis distance between the second grid point and first grid point, divides the distance between the input value b and the B coordinate of the first grid point by the B-axis distance between the third grid point and first grid point, multiplies the two quotients, and multiplies the product by the amount of correction $\delta$.

Also, Equation (11) calculates the amount of correction $\delta4$ to the load value 5 at the fourth grid point in the N-th layer as follows: divides the distance between the input value a and the A coordinate of the first grid point by the B-axis distance between the A coordinate of the second grid point and the third grid point, divides the distance between the input value b and the B coordinate of the first grid point by the B-axis distance between the third grid point and first grid point, multiplies the two quotients, and multiplies the product by the amount of correction $\delta$.

In this way, the amounts of correction $\delta1$(N) to $\delta4$(N) in Equations (8) to (11) above are calculated using inverse ratios of distances between pairs of coordinate points, i.e., between the A and B coordinates of grid points on the A and B coordinates with a range of 0 to 1 and the A and B coordinates of the input values 4. Thus, closer the grid point to the coordinates of an input value, the larger the amount of correction to the load value 5 at the grid point.

Now, based on numerical examples shown in Figures 3 to 5, description will be given of how the output value p' is calculated and the load values 5 are corrected in relation to the input value 4 (a, b) according to Equations (5) to (11) above. Figures 3(a) to 3 (c) are diagrams showing relationship between each layer and output values of a first layer 1a' to a third layer 1c' which compose the input value space 1 of the 3D CMAC shown in Figures 1(a) to 1(c) when (0.5, 0.5) is entered as the input value 4 in the layers. Figure 4 is a view showing stacked relations between the three layers of the input value space 1 and output values after some input values are learned.

If the output values of the first layer 1a' to the third layer 1c' of the 3D CMAC with respect to the input values 4 (0.5, 0.5) are denoted by p'(1) top'(3), respectively, they are calculated according to Equations (5) to (7) as follows: p'(1) = 2.5, p'(2) = 3.861111, p'(3) = 3.83333. Thus, the output value p' of the 3D CMAC, which is the total sum of p'(1) to p'(3), is p' = 10.1944.

When 15 is provided as the teacher data p for the output value p' for the input value 4 (0.5, 0.5), the amount of correction $\delta$ in each layer is calculated as $\delta$ =0.16018 according to Equation (1). In the first layer 1a', the coordinates of the load values 5 at the first to fourth grid points in which the input values are entered are as follows: (0.33, 0.33, 2), (0.66, 0.33, 2), (0.33, 0.66, 3), and (0.66, 0.66, 3). Thus, according to Equations (8) to (11), the amounts of correction $\delta1$(1) to $\delta4$(1) to the load values 5 at the first to fourth grid points in the first layer 1a' are calculated as 0.038, 0.040, 0.040, and 0.043, respectively. Hence, the load values 5 at the first to fourth grid points in the first layer 1a' corrected by the amounts of correction $\delta1$ (1) to $\delta4$(1) are 2.038, 2.040. 3.040, and 3.043, respectively. The amounts of correction in the second layer 1b' and third layer 1c' can be calculated according to Equations (8) to (11) similarly to the first layer 1a', and description thereof will be omitted.

In this way, learning is conducted through the process of correcting the load values 5 and it ends when the output value p' matches the teacher data or the difference between the output value p' and teacher data falls within allowable limits. As can be seen from Figure 3, in all the layers, the output values for the input value 4 (0.5, 0.5) after learning change slopingly rather than stepwise. Furthermore, when output values produced after some input values are learned are stacked, the output values of the 3D CMAC change gradually as shown in Figure 4.

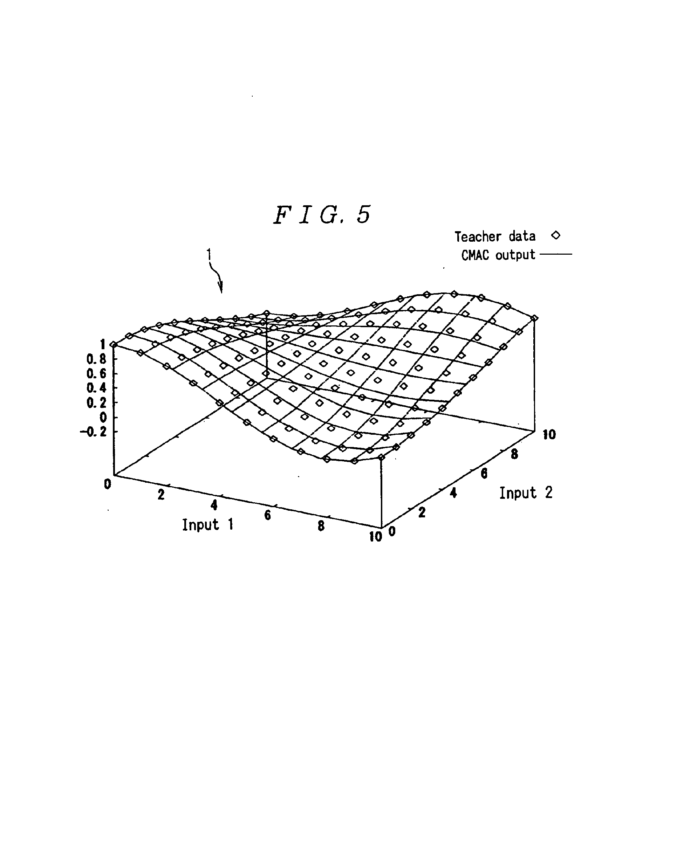

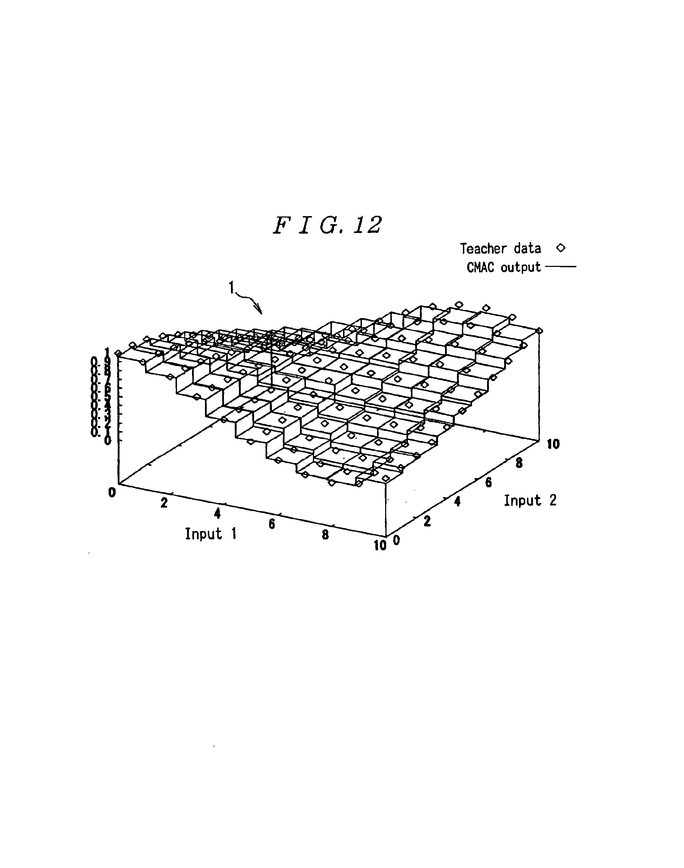

Next, capabilities of the 3D CMAC for nonlinear function approximations will be described in comparison with the conventional CMAC with reference to Figures 5 and 12. Figure 12 is a perspective view showing relationship between an input value space and output values after the nonlinear function in Equation (12) above is learned by a conventional CMAC. Figure 5 is a perspective view showing relationship between the input value space and output values after a nonlinear function in Equation (12) is learned by the 3D CMAC according to the present invention.

The function learned in Figures 5 and 12 is shown below

$$\cos(x/2.5)*\cos(y/4)*0.5+0.5 \tag{12}$$

In both conventional CMAC in Figure 12 and 3D CMAC in Figure 5, the input value space is composed of three layers, each layer is divided into 3 x 3 regions, and the input-output relationship according to Equation (12) is learned using 100 points of teacher data. Now, let's compare the two. In Figure 12, the changes in the output values after the training of the CMAC are uniform within each cell, but there are steps between adjacent cells, meaning that the output values change stepwise among cells. Since output values change sharply between adjacent cells, input values around highly variable points are likely to result in output values which vary greatly from their ideal values. Thus, unless the numeric ranges are divided into small segments, output values for input values without teacher data may vary greatly from their ideal values.

On the other hand, with the 3D CMAC, the output values between cells after learning continue smoothly with no sharp change between adjacent cells unlike in the case of the conventional CMAC. Thus, output values for input values without teacher data are not likely to vary much from their ideal values.

Average errors actually calculated were 0.000107 for the conventional CMAC, and 0.000005 for the 3D CMAC, which means that the 3D CMAC has 1/20 or less the error of the conventional CMAC. Regarding maximum error, whereas the conventional CMAC has a maximum error of 0.88460, the 3D CMAC has a maximum error of 0.003149, which is approximately 1/30 the maximum error of the conventional CMAC.

Thus, through learning operations performed by the 3D CMAC with load values set on grid points, the output values can be made to change gradually and high generalizability can be obtained even if the input value space is not refined or stratified. This makes it possible to reduce memory requirements for arithmetic operations and improve learning accuracy without heavy learning operations.

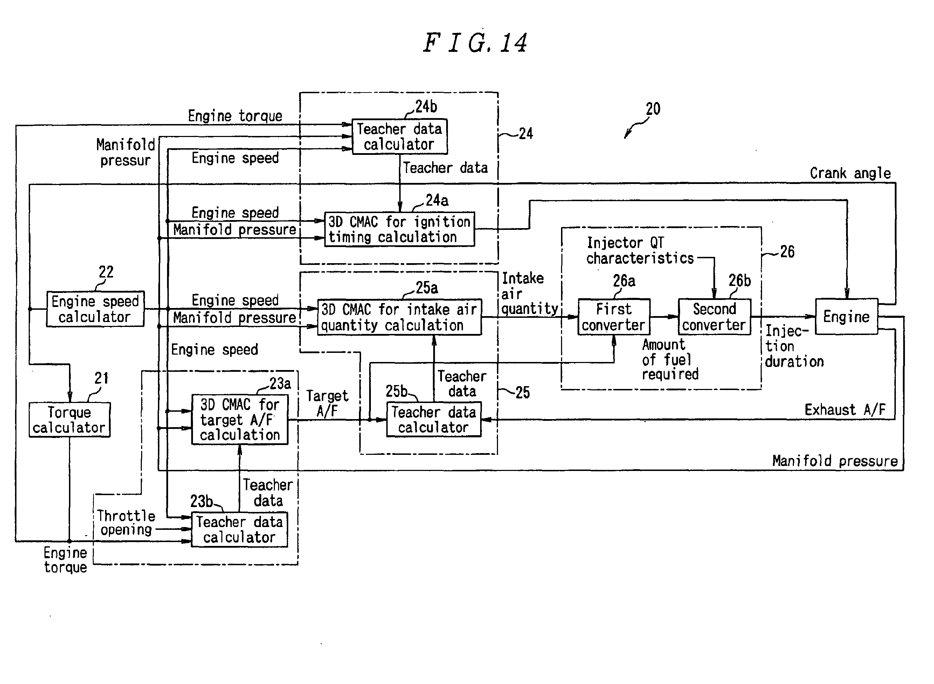

Next, an example in which the learning arithmetic unit according to the present invention is applied to engine control of a real vehicle will be described with reference to Figures 14, 15, 18, and 19.

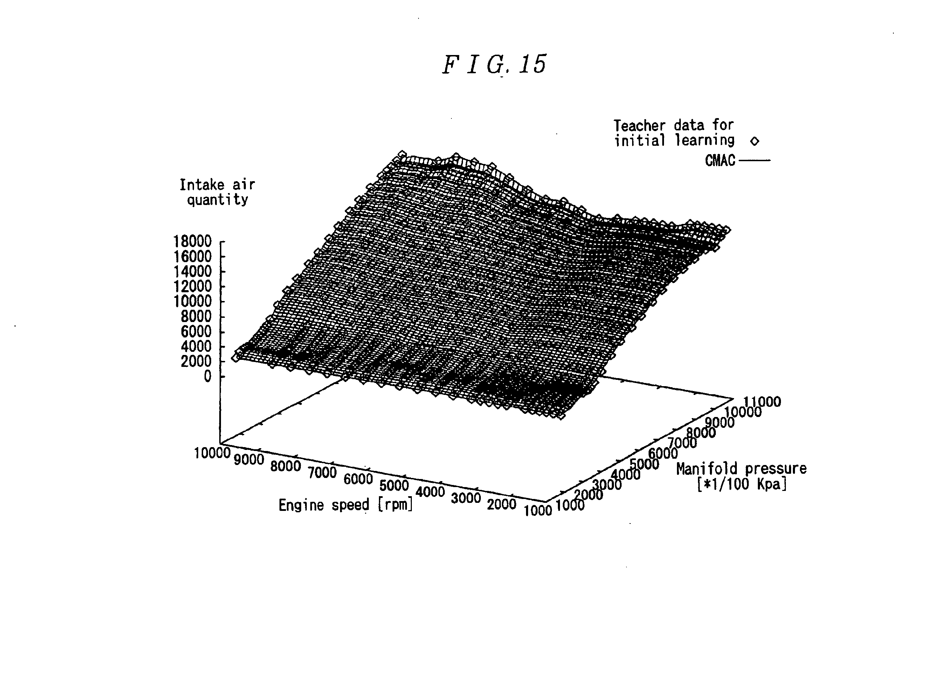

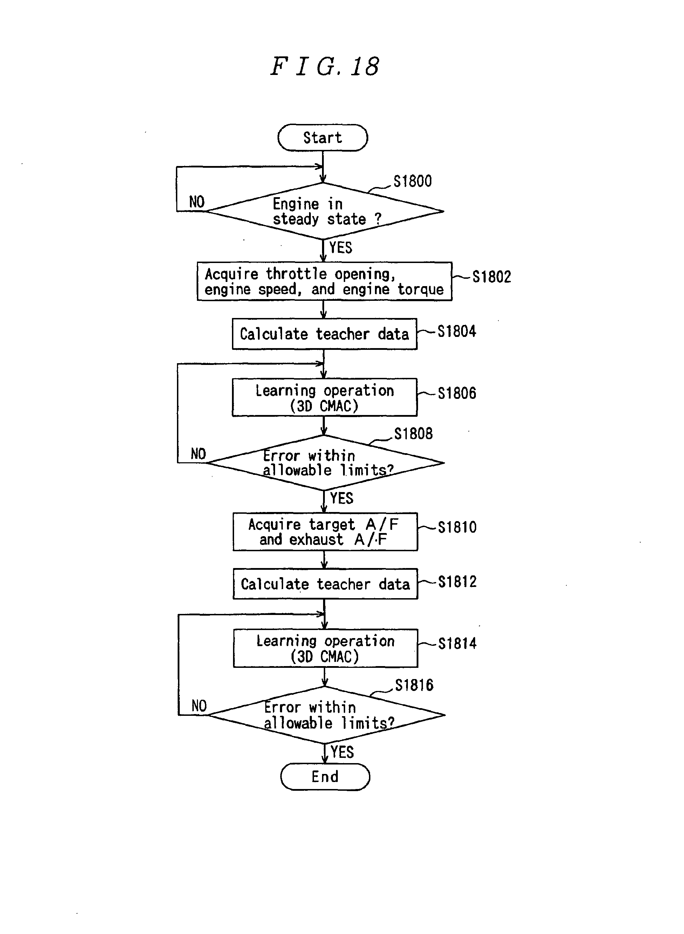

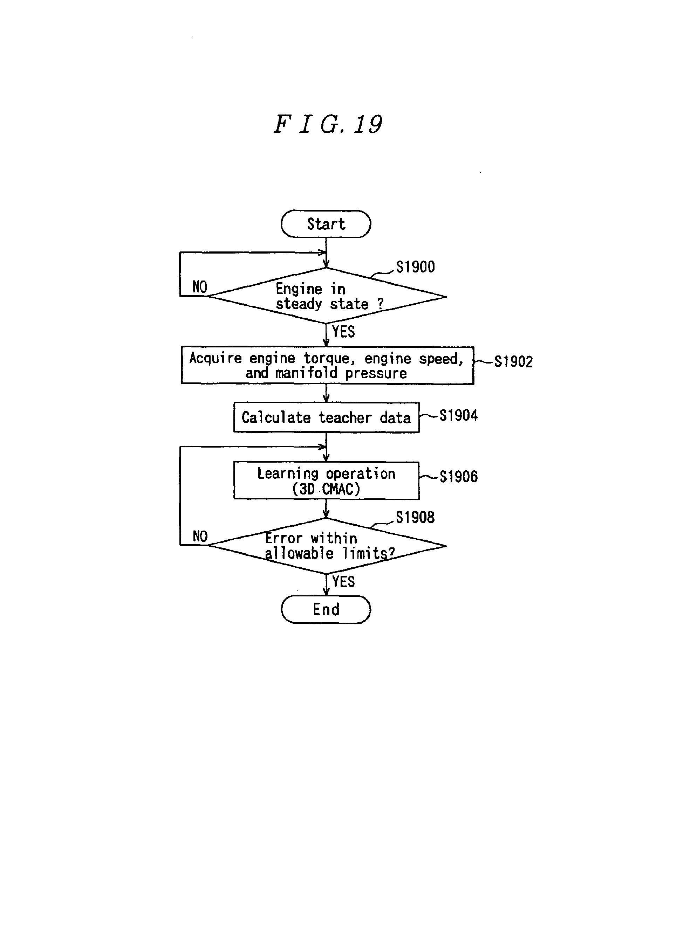

Figure 14 is a block diagram showing an engine controller 20 which determines an optimal fuel ignition timing and fuel injection duration from crank angles, manifold pressure, engine speed, etc. using three learning arithmetic units according to the present invention and Figure 15 is a diagram showing input-output relationship during initial learning conducted by the learning arithmetic unit which calculates intake air quantity. Figure 18 is a flowchart showing the process of determining an optimal intake air quantity and Figure 19 is a flowchart showing the process of determining an optimal fuel ignition timing.

A configuration of the engine controller 20 will be described below with reference to Figure 14.

The engine controller 20 comprises, a torque calculator 21, engine speed calculator 22, first learning processor 23, second learning processor 24, third learning processor 25, and calculation data converter 26. Furthermore, it comprises a ROM which stores software for computational processes and the like to be run in various components a RAM which stores information necessary for calculation and a central processing unit (CPU) which runs the software although they are not shown in the figure.

The torque calculator 21 calculates engine torque from crank angles detected by a crank angle sensor (not shown) and outputs it to the first learning processor 23. The engine speed calculator 22 calculates engine speed by a crank angle detected similarly and outputs it to the third learning processor 25.

The first learning processor 23 consists of a 3D CMAC 23a for target A/F calculation which calculates a target A/F (air-fuel ratio) from manifold pressure detected by a manifold pressure sensor (not shown) as well as from the engine speed, and a teacher data calculator 23b which calculates teacher data for the 3D CMAC 23a from throttle opening and engine torque based on user preferences.

The second learning processor 24 consists of a 3D CMAC 24a for ignition timing calculation which calculates fuel ignition timing from engine speed and manifold pressure, and a teacher data calculator 24b which calculates teacher data for the 3D CMAC 24a according to required spark advance from engine torque, engine speed, and manifold pressure.

The third learning processor 25 consists of a 3D CMAC 25a for intake air quantity calculation which calculates intake air quantity from the engine speed and manifold pressure, and a teacher data calculator 25b which detects discrepancy between the target A/F and exhaust A/F and calculates teacher data for the 3D CMAC 25a.

The calculation data converter 26 consists of a first converter 26a which converts the target A/F into fuel quantity based on the intake air quantity calculated by the 3D CMAC 25a for intake air quantity calculation and the target A/F calculated by the 3D CMAC 23a for target A/F calculation, and a second converter 26b which converts the calculated fuel quantity into an injection duration based on converted fuel quantity and injector QT characteristics.

The 3D CMAC used for control has a five-layer input value space with each layer divided into 20 x 15 regions. It has gone through initial learning so as to output desired control values designed for initial learning in laboratories. Also, it is designed to calculate control values using input-output relations after initial learning by means of forward calculations if there are large variations during transient operation. Furthermore, when the engine enters steady state, each 3D CMAC starts learning based on feedback information such as manifold pressure, and load values of the each 3D CMAC are corrected so that the engine can start with the optimal fuel injection quantity and ignition timing, taking into consideration user preferences.

Regarding the relationship between the input value space and output values of the 3D CMAC 25a for intake air quantity calculation after initial learning conducted by the third learning processor 25, the output values change smoothly rather than stepwise and the average error and maximum error, which are as small as 0.11% and 1.53%, respectively, are acceptable in engine control, as shown in Figure 15.

A learning process of intake air quantity in the engine controller 20 will be described with reference to Figure 18.

As shown in Figure 18, the engine controller 20 judges in Step S1800 whether the engine is in steady state. If the engine is in steady state (Yes) , the engine controller 20 goes to Step S1802. Otherwise (No), the engine controller 20 waits until the engine enters steady state.

In Step S1802, the teacher data calculator 23b acquires throttle opening, engine speed, and engine torque. Then, it goes to Step S1804.

In Step S1804, the teacher data calculator 23b determines user preferences and engine characteristics based on received information and calculates teacher data for the 3D CMAC 23a for target A/F calculation. Then it goes to Step S1806.

In Step S1806, using the calculated teacher data, the teacher data calculator 23b does learning through the process of correcting load values of the 3D CMAC 23a for target A/F calculation, and then it goes to Step S1808.

In Step S1808, the teacher data calculator 23b judges whether an output value, i.e., error between the target A/F and the teacher data is within allowable limits. If the error is within the allowable limits (Yes), the teacher data calculator 23b outputs the calculated target A/F to the third learning processor 25 and the flow goes to Step S1810. Otherwise (No), the teacher data calculator 23b goes to Step S1806 to repeat training of the 3D CMAC.

In Step S1810, teacher data calculator 25b acquires exhaust A/F as well as the target A/F calculated by the first learning processor 23, and then it goes to Step S1812.

In Step S1812, the teacher data calculator 25b calculates discrepancy between the acquired exhaust A/F and target A/F and calculates teacher data for the 3D CMAC 25a for intake air quantity calculation, and then it goes to Step S1814.

In Step S1814, using the calculated teacher data, the teacher data calculator 25b does learning through the process of correcting load values of the 3D CMAC 25a for intake air quantity calculation, and then it goes to Step S1816.

In Step S1816, the teacher data calculator 25b judges whether an output value, i.e., error between the intake air quantity and the teacher data is within allowable limits. If the error is within the allowable limits (Yes), the teacher data calculator 25b finishes the learning operation. Otherwise (No), the teacher data calculator 25b goes to Step S1814 to repeat training of the 3D CMAC.

In short, when the engine enters steady state, the first learning processor 23 generates teacher data from throttle opening, engine speed, and engine torque, and then repeats Steps S1806 to S1808 so that the error between the output value and teacher data will be within the allowable limits. When the learning is finished, the third learning processor 25 similarly generates teacher data using the current exhaust A/F fed back and the target A/F calculated by the first learning processor 23, and then repeats Steps S1814 to S1816 so that the error between the output value and teacher data will be within the allowable limits.

Subsequently, both 3D CMACs regard similar input values as learned values, perform forward calculations, and output the output value after learning as a controlled variable. Also, the calculated intake air quantity is input in the calculation data converter 26 and converted into injection quantity by the first converter 26a with the target A/F taken into consideration. Then, the second converter 26b converts the injection quantity into an injection duration by taking the injector QT characteristics into consideration. Finally, the injection duration is transmitted to an injector, which is a component of the engine as a control signal.

Next, learning of optimal fuel ignition timing will be described with reference to the flowchart of Figure 19.

As shown in Figure 19, the engine controller 20 judges in Step S1900 whether the engine is in steady state. If the engine is in steady state (Yes), the engine controller 20 goes to Step 51902. Otherwise (No), the engine controller 20 waits until the engine enters steady state.

In Step S1902, the teacher data calculator 24b acquires engine torque, engine speed, and manifold pressure. Then, it goes to Step S1904.

In Step S1904, the teacher data calculator 23b determines required spark advance based on acquired information and calculates teacher data for the 3D CMAC 23a for ignition timing calculation. Then it goes to Step S1906.

In Step S1906, using the calculated teacher data, the teacher data calculator 24b does learning through the process of correcting load values of the 3D CMAC 24a for ignition timing calculation, and then it goes to Step S1908.

In Step S1908, the teacher data calculator 24b judges whether an output value, i.e., error between the ignition timing and the teacher data is within allowable limits. If the error is within the allowable limits (Yes), the teacher data calculator 24b finishes the learning operation. Otherwise (No), the teacher data calculator 24b goes to Step S1906 to repeat training of the 3D CMAC.

As is the case with the first and third learning processors, the second learning processor 24 repeats Steps S1906 to S1908 so that the error between the output value and teacher data will be within the allowable limits. Subsequently, the 3D CMAC regards similar input values as learned values, performs forward calculations, and outputs appropriate ignition timing.

In this way, through real-time learning during driving, the engine can be controlled according to user preferences. Also, by constantly monitoring differences between output values and teacher data and making corrections, as required, to keep errors within allowable limits, it is possible to control the engine optimally in such a way as to accommodate changes over the years and changes in environment. The 3D CMAC, which does not require heavy operations and features high learning accuracy, is suitable for control which requires such real-time learning operations.

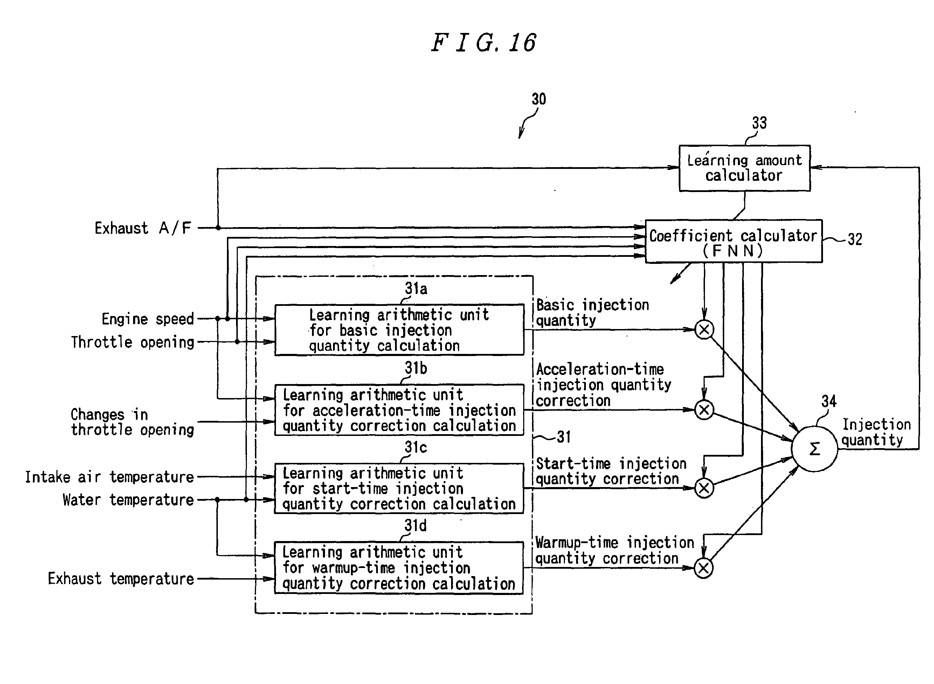

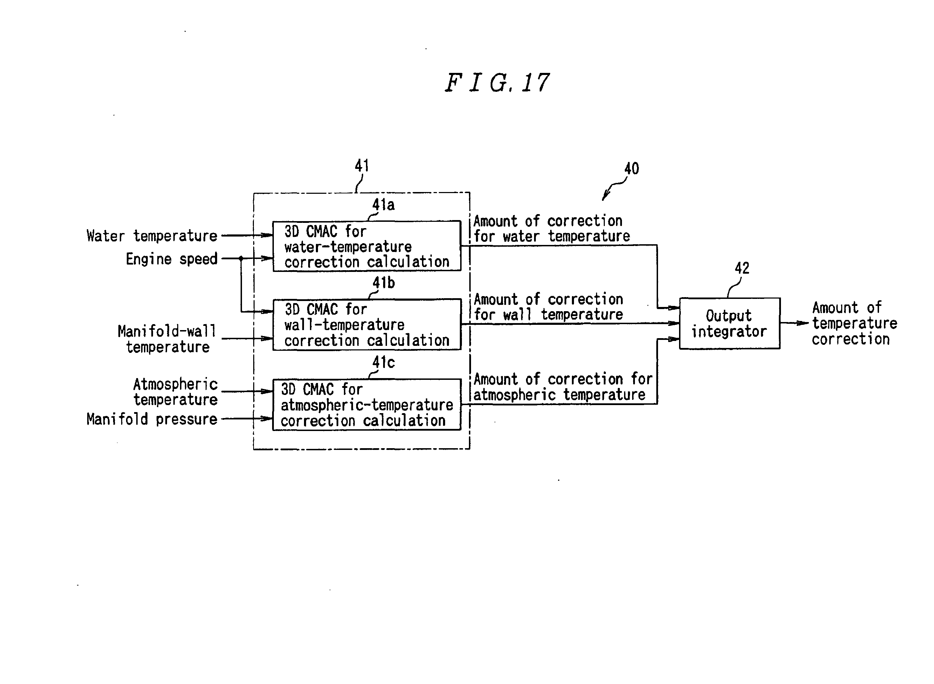

Next, as a second embodiment, an example in which a multi-input controller employing the learning arithmetic unit according to the present invention is applied to engine control will be described with reference to drawings. Figure 16 is a diagram showing a configuration of a multi-input controller for determining injection quantity using many types of input value in car engine control, where the learning arithmetic units according to the present invention are installed together. Figure 17 is a block diagram showing a configuration of a multi-input controller for temperature correction using many types of input value, where the learning arithmetic units according to the present invention are installed together.

First, the configuration will be described. As shown in Figure 16, the multi-input controller 30 for determining injection quantity comprises a multi-input learning processor 31, coefficient calculator 32, learning amount calculator 33, and controlled-variable calculator 34. Furthermore, it comprises a ROM which stores software for computational processes and the like to be run in various components a RAM which stores information necessary to calculation and a central processing unit (CPU) which runs the software although they are not shown in the figure.

The multi-input learning processor 31 consists of a learning arithmetic unit 31a for basic injection quantity calculation which learns input-output relationship, with engine speed and throttle opening being input values and basic injection quantity being an output value, and calculates optimal basic injection quantity; a learning arithmetic unit 31b for acceleration-time injection quantity correction calculation which learns input-output relationship, with rates of change in the engine speed and throttle opening being input values and an amount of correction to injection quantity needed during acceleration of the vehicle being an output value, and calculates the optimal amount of correction; a learning arithmetic unit 31c for start-time injection quantity correction calculation which learns input-output relationship, with intake-air temperature and water temperature being input values and an amount of correction to injection quantity needed at start-up being an output value, and calculates the optimal amount of correction; and a learning arithmetic unit 31d for warmup-time injection quantity correction calculation which learns input-output relationship, with water temperature and exhaust temperature being input values and injection quantity required to warm the vehicle being an output value, and calculates the optimal amount of correction.

The coefficient calculator 32 calculates weights for outputs to the learning arithmetic units using fuzzy neural networks (FNNs) based on computational results received from the learning amount calculator 33 (described later) as well as on input values--namely, the exhaust A/F, engine speed, and throttle opening, and water temperature.

The learning amount calculator 33 calculates the amounts of learning needed for the load values and output values of the learning arithmetic units so that the injection quantity and exhaust A/F calculated by the controlled-variable calculator 34 (described later) will approach desired values.

The controlled-variable calculator 34 calculates the total sum of the output values of the learning arithmetic units as a controlled variable.

More specifically, the multi-input controller 30 for determining injection quantity starts an arithmetic learning process when the vehicle starts running and the engine starts steady-state operation. Thus, the learning is conducted on the input-output relationship during the steady-state operation of the engine to make corrections in the load values and weights on output values of the learning arithmetic units so that injection quantities approach desired values (appropriate injection quantities). To make corrections to the weights, the learning amount calculator 33 calculates the amounts of learning based on the exhaust A/F and injection quantity, and then the coefficient calculator 32 updates coefficients to appropriate values based on the calculated amounts of learning. Corrections to the load values are made similarly to the corrections to the load values of the 3D CMAC using the amounts of learning calculatedby the learning amount calculator 33.

In this way, learning makes it possible to correct the discrepancy between the injection quantity determined by the multi-input controller 30 for determining injection quantity and desired injection quantity, and consequently, to control the engine according to its characteristics.

The learning arithmetic units installed together are configured to accept two inputs and produce one output instead of accepting as many inputs as there are types of input. Each of the learning arithmetic units calculates a control variable according to the input type it accepts, and then the control variables are weighted and totaled to finally calculate the injection quantity required. Thus, learning is done using a plurality of learning arithmetic units which involves simple computational processes. This makes it possible to avoid burdening a single learning arithmetic unit with complex processes, reduce memory requirements, and avoid significant drops in computing speed. Also, since FNN-based learning operations can be used to weight output values, control can be performed flexibly according to engine conditions and control environment.

Next, as a third embodiment, description will be given of how controlled variables are calculated in a multi-input controller for temperature correction shown in Figure 17.

First, the configuration will be described. The multi-input controller 40 for temperature correction consists of a learning processor 41 for temperature correction calculation and an output integrator 42.

The learning processor 41 for temperature correction calculation consists of a 3D CMAC 41a for water-temperature correction calculation which calculates amounts of correction for water temperature based on the water temperature and engine speed, a 3D CMAC 41b for wall-temperature correction calculation which calculates amounts of correction for manifold-wall temperature based on the manifold-wall temperature, and a 3D CMAC 41c for atmospheric-temperature correction calculation which calculates amounts of correction for atmospheric temperature based on the atmospheric temperature and manifold pressure.

The output integrator 42 calculates a final amount of temperature correction from the amounts of temperature correction calculated by the learning processor 41 for temperature correction calculation, using one of the following three methods for calculating controlled variables.

The first controlled-variable calculation method determines the value of a controlled variable by averaging the amounts of temperature correction. Specifically, suppose for example, an output value of the 3D CMAC 41a for water-temperature correction calculation is "1.2," an output value of the 3D CMAC 41b for wall-temperature correction calculation is "1.0," and an output value of the 3D CMAC 41c for atmospheric-temperature correction calculation is "1.1." Then, the value of the controlled variable is (1.2 + 1.0 + 1.1)/3 = 1.1, which means that the amount of temperature correction is +10%.

The second controlled-variable calculation method determines the value of a controlled variable by using the maximum value of the amount of temperature correction. Specifically, suppose for example, an output value of the 3D CMAC 41a for water-temperature correction calculation is "1.2," an output value of the 3D CMAC 41b for wall-temperature correction calculation is "1.0," and an output value of the 3D CMAC 41c for atmospheric-temperature correction calculation is "1.1." Then, the value of the controlled variable is given by the maximum value 1.2, meaning that the amount of temperature correction is +20%.

The third controlled-variable calculation method determines the value of a controlled variable by weighting the amounts of temperature correction based on their contribution rate to the final value of the controlled variable and totaling the weighted amounts. Specifically, suppose for example, an output value of the 3D CMAC 41a for water-temperature correction calculation is"1.2," an output value of the 3D CMAC 41b for wall-temperature correction calculation is "1.0," and an output value of the 3D CMAC 41c for atmospheric-temperature correction calculation is "1.1." Suppose also that the contribution rate is high in the order of water temperature, wall temperature and atmospheric temperature, the water temperature, wall temperature, atmospheric temperature have contribution ratios of 50%, 30%, and 20%, respectively. Multiplying the amounts of temperature correction by the respective contribution ratios and totaling the products, the value of the controlled variable is given by 1.2 * 0.5 + 1.0 * 0.3 + 1.1 * 0.2 = 1.12, which means that the amount of temperature correction is +12%.

Among the above examples of how to calculate the value of the controlled variable, which is the final output value, the first controlled-variable calculation method can determine the value of the controlled variable by taking into consideration elements of output values equally, the second controlled-variable calculation method can determine the value of the controlled variable taking into consideration the worst element of the output values, and the third controlled-variable calculation method can weight the output values according to the degree of their contribution rate to the controlled variable.

The first to third learning processors 23 to 25 shown in figure 14 correspond to the learning arithmetic unit described in claims 1 to 4 while the multi-input controller 30 for determining injection quantity shown in Figure 16 and multi-input controller 40 for temperature correction shown in Figure 17 correspond to the multi-input controllers using learning arithmetic units described in claims 5 to 9.

Incidentally, although in the second and third embodiments described above, the learning arithmetic units installed together accept two inputs and produce one output, this is not restrictive and they may accommodate any number of inputs and outputs, such as three inputs and one output, without departing from the spirit and scope of the present invention. However, if the number of input dimensions is increased, it becomes necessary to determine the output value by a method other than interpolation computation via three-dimensional mapping.

Industrial Applicability

1. With the learning arithmetic unit according to the present invention, since load values are assigned to the grid points formed by the regions into which an input value space is divided, the output values can be made to change slopingly rather than stepwise, thereby improving generalizability.

Also, since the input value space can be composed of a plurality of stacked layers, the input value space can be refined without degrading the generalizability of the individual layers, and thus it is possible to moderate changes in the output values and improve learning accuracy.

Also, since amounts of correction to the load values are set up according to the distance between the positions of input values in the region and grid points, it is possible to correct load values appropriately and improve learning accuracy by determining the amounts of correction using an inverse ratio of the distance or the like.

Also, since the distance between the positions of input values in the region and grid points is also used during normal calculation of output values, it is possible to make output values change gradually by calculating the output values using an inverse ratio of the distance or the like.

2. Since the multi-input controller according to the present invention has a plurality of learning arithmetic units installed together in a control system which has multiple types of input value instead of using a single learning arithmetic unit with a multidimensional input value space, each learning arithmetic unit needs to have only a small number of input dimensions and a plurality of simple arithmetic operations can be learned in combination. Consequently, it is possible to conduct learning without increasing the time required for learning operation. Also, by handling a learning arithmetic unit which accepts two inputs and produces one output as a modular unit, it is possible to readily implement a multi-input controller.

Also, since output values of the learning arithmetic units installed together are weighted before being totaled and the effect of the output values on the controlled variable calculated finally is taken into consideration in weighting the output values, it is possible to give flexibility to output values and calculate appropriate value of the controlled variable at an early stage.

Also, since a controlled variable is calculated by contribution ratio of the output values of the learning arithmetic units, control can be performed by reflecting the output values of high contribution rate.

Also, since output values of the learning arithmetic units are averaged to determine the value of a controlled variable, it is possible to determine the value of the controlled variable by reflecting all elements of input values equally, and thereby perform control flexibly.

Also, since the maximum value or minimum value of the output values of the learning arithmetic units is used as the controlled variable, the controlled variable can make correction for the worst element, which allows pinpoint control.

## Claims

1. A learning arithmetic unit, **characterized by** comprising: an input value space in which numeric ranges of input values are quantized; regions formed by dividing said input value space into a grid with fixed spacing; and load values assigned to grid points in said region, the learning arithmetic unit comprising: output value calculation means which calculates output values of the regions with respect to the input values using the load values at said grid points in said regions which correspond to said input values; and load value correction means which corrects the load values at the grid points in the regions so that the calculated output values of said regions coincide with predetermined ideal values of the output values .

2. The learning arithmetic unit according to claim 1, wherein: said input value space is stratified into a desired number of layers containing regions; and said output value calculation means calculates output values of said regions in said each of the layers in relation to said input values and totals these said output values.

3. The learning arithmetic unit according to claim 1 or 2, wherein said load value correction means sets amounts of correction to said load values according to distance between position coordinates of said input values in the respective regions and coordinates of grid points in the same coordinate system.

**4.** The learning arithmetic unit according to claim 3, wherein said load value correction means sets said amounts of correction using an inverse ratio of the distance between the position coordinates of said input values in the respective regions and coordinates of grid points in the same coordinate system as a weight.

**5.** The learning arithmetic unit according to any of claims 1 to 4, wherein when calculating output values of said regions whose said load values are not corrected, said output value calculation means calculates the output values of said regions according to the distance between the position coordinates of said input values in the respective regions and coordinates of grid points in the same coordinate system.

**6.** The learning arithmetic unit according to claim 5, wherein said output value calculation means calculates the output values of said regions according to an inverse ratio of the distance between the position coordinates of said input values in the respective regions and coordinates of grid points in the same coordinate system.

**7.** Amulti-input controller using learning arithmetic units, **characterized in that**: said learning arithmetic units set forth in claims 1 to 6 are installed together in a control system which has multiple types of input value; two predetermined input values from among said multiple types of input value are entered in the learning arithmetic units; the total sum of output values of said regions in relation to said input values to the learning arithmetic units installed together is calculated as a controlled variable of said control system; and load values at grid points in the regions which correspond to said input values are corrected so that the controlled variable of the regions coincide with a predetermined ideal value of the controlled variable.

**8.** The multi-input controller using learning arithmetic units according to claim 7, wherein each output value of said learning arithmetic units installed together is weighted and the total sum of the output values is calculated as said controlled variable.

**9.** The multi-input controller using learning arithmetic units according to claim 8, wherein the output values of said learning arithmetic units installed together are weighted based on degree of their contribution ratios to said controlled variable.

**10.** The multi-input controller using learning arithmetic units according to claim 7, wherein the output values of said learning arithmetic units installed together are averaged to determine the controlled variable.

**11.** The multi-input controller using learning arithmetic units according to claim 7, wherein the maximum value or minimum value of the output values of said learning arithmetic units installed together is used as said controlled variable.

FIG. 1 (A)

First layer

FIG. 1 (B)

Second layer

FIG. 1 (C)

Third layer

*F I G. 2*

FIG. 3(A)

FIG. 3(B)

FIG. 3(C)

# FIG. 4

CMAC after learning ——
Teacher data ◇

FIG. 5

# *F I G. 6*

1 unit of quantization

First layer

*F I G. 7 (A)*

Second layer

*F I G. 7 (B)*

Third layer

*F I G. 7 (C)*

F I G. 8 (A)

First layer

F I G. 8 (B)

Second layer

F I G. 8 (C)

Third layer

FIG. 9 (A)

First layer

FIG. 9 (B)

Second layer

FIG. 9 (C)

Third layer

$F\,I\,G.\,10\,(A)$

$F\,I\,G.\,10\,(B)$

$F\,I\,G.\,10\,(C)$

*F I G. 11*

FIG. 12

Teacher data ◇
CMAC output ——

*F I G. 13*

## F I G. 14

# FIG. 15

Teacher data for
initial learning  ◇
CMAC ———

Intake air
quantity

18000
16000
14000
12000
10000
8000
6000
4000
2000
0

Engine speed [rpm]

10000 9000 8000 7000 6000 5000 4000 3000 2000 1000

1000 2000 3000 4000 5000 6000 7000 8000 9000 10000 11000

Manifold pressure
[*1/100 Kpa]

EP 1 359 540 A1

## FIG. 16

30

EP 1 359 540 A1

FIG. 17

Water temperature ——

Engine speed ——

41

41a

3D CMAC for water-temperature correction calculation

Amount of correction for water temperature

40

41b

3D CMAC for wall-temperature correction calculation

Amount of correction for wall temperature

Manifold-wall temperature ——

Atmospheric temperature ——

41c

3D CMAC for atmospheric-temperature correction calculation

Amount of correction for atmospheric temperature

Manifold pressure ——

42

Output integrator

Amount of temperature correction

EP 1 359 540 A1

*F I G. 18*

```
                    ( Start )
                        |
                        v
          NO        /          \  ~S1800
         <---------< Engine in    >
                    \ steady state ? /
                        | YES
                        v
         +-------------------------------+
         | Acquire throttle opening,     |~S1802
         | engine speed, and engine torque|
         +-------------------------------+
                        |
                        v
         +------------------------+
         | Calculate teacher data |~S1804
         +------------------------+
                        |
                        v
         +------------------------+
         | Learning operation     |~S1806
         | (3D CMAC)              |
         +------------------------+
                        |        ~S1808
                        v
         NO        /          \
        <---------< Error within  >
                   \ allowable limits? /
                        | YES
                        v
         +------------------------+
         | Acquire target A/F     |~S1810
         | and exhaust A/F        |
         +------------------------+
                        |
                        v
         +------------------------+
         | Calculate teacher data |~S1812
         +------------------------+
                        |
                        v
         +------------------------+
         | Learning operation     |~S1814
         | (3D CMAC)              |
         +------------------------+
                        |        ~S1816
                        v
         NO        /          \
        <---------< Error within  >
                   \ allowable limits? /
                        | YES
                        v
                    ( End )
```

# F I G. 19

```
                    ┌─────────┐
                    │  Start  │
                    └────┬────┘
                         │
         ┌───────────────┤
         │               ▼
         │          ╱─────────╲      ~S1900
     NO  │         ╱ Engine in  ╲
    ◄────┤         ╲ steady state ?╱
         │          ╲─────────╱
         │               │ YES
         │               ▼
         │  ┌─────────────────────────────────┐
         │  │ Acquire engine torque, engine speed, │─~S1902
         │  │     and manifold pressure        │
         │  └────────────────┬────────────────┘
         │                   ▼
         │        ┌────────────────────┐
         │        │ Calculate teacher data │─~S1904
         │        └──────────┬─────────┘
         │                   │
      ┌──┼───────────────────┤
      │  │                   ▼
      │  │        ┌────────────────────┐
      │  │        │ Learning operation │─~S1906
      │  │        │    (3D CMAC)       │
      │  │        └──────────┬─────────┘
      │  │                   ▼              ~S1908
      │  │             ╱─────────╲
   NO │  │            ╱ Error within ╲
   ◄──┤  │            ╲ allowable limits?╱
      │  │             ╲─────────╱
      │  │                  │ YES
      │  │                  ▼
      │  │             ┌─────────┐
      │  │             │   End   │
      │  │             └─────────┘
```

<table>
<tr><td colspan="2" align="center">**INTERNATIONAL SEARCH REPORT**</td><td>International application No.<br><br>PCT/JP02/00931</td></tr>
</table>

| | |
|---|---|
| **A. CLASSIFICATION OF SUBJECT MATTER**<br>Int.Cl⁷ G06N3/08, 3/04 | |

According to International Patent Classification (IPC) or to both national classification and IPC

**B. FIELDS SEARCHED**

Minimum documentation searched (classification system followed by classification symbols)
Int.Cl⁷ G06N3/00-3/10, G05B13/00-13/04, G06F9/44, F02D45/00

Documentation searched other than minimum documentation to the extent that such documents are included in the fields searched
| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)
WPI/L(DIALOG), INSPEC(DIALOG)

**C. DOCUMENTS CONSIDERED TO BE RELEVANT**

| Category* | Citation of document, with indication, where appropriate, of the relevant passages | Relevant to claim No. |
|---|---|---|
| A | JP, 9-198105, A (Meidensha Corp.),<br>31 July, 1997 (31.07.97),<br>Page 2, left column, lines 21 to 32; page 2, right column,<br>lines 44 to 49; page 3, right column, line 13 to page<br>3, left column, line 35; Fig. 2<br>(Family: none) | 1-11 |

| ☐ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>04 March, 2002 (04.03.02) | Date of mailing of the international search report<br>12 March, 2002 (12.03.02) |
| Name and mailing address of the ISA/<br>Japanese Patent Office | Authorized officer |
| Facsimile No. | Telephone No. |

Form PCT/ISA/210 (second sheet) (July 1998)